# EUROPEAN PATENT SPECIFICATION

(11) **EP 4 514 585 B1**
(45) Date of publication and mention of the grant of the patent: **25.03.2026**
(21) Application number: 23723419.0
(22) Date of filing: 21.04.2023
(51) Int. Cl.: B29C 45/23, B29C 45/26, B29C 45/27, B29C 45/20

(54) **AN INJECTION MOLDING MACHINE**
SPRITZGIESSMASCHINE
MACHINE DE MOULAGE PAR INJECTION

(30) Priority: 28.04.2022 DK PA202270225
(43) Date of publication of application: 05.03.2025
(73) Proprietor: LEGO A/S, 7190 Billund (DK)
(72) Inventor: KRISTENSEN, Hans-Jørn Terp, 7190 Billund (DK); LAMBÆK, Jens Stamp, 7190 Billund (DK)
(74) Representative: Guardian IP Consulting I/S
(86) International application number: PCT/EP2023/060380
(87) International publication number: WO 2023/208749

(56) References cited:
- EP-A1- 0 013 119
- US-A- 4 260 359
- US-A- 4 370 122

## Description

### Prior art:

The present invention relates to the field of injection molding using an injection molding machine configured for automated molding of work pieces in plastics, said injection-molding tool comprising a mold and an injection barrel with an outlet and where the injection molding machine further comprises an injection nozzle with a nozzle tip forming a distal end of the injection nozzle, and where the injection nozzle have an injection channel adapted for leading fluid plastic material from the barrel to the mold and extending along a longitudinal axis from a proximal end of the injection nozzle fastened to the barrel and to a nozzle gate opening arranged at the nozzle.

In relation to injection molding machines of this type, and especially injection molding machines operating with molds of the cold runner type the injection nozzle may be equipped with a valve construction in order to block the flow of plastic material through the injection nozzle between each molding cycle, and for this purpose different embodiments of injection nozzles with anti drooling valves have been disclosed in the prior art.

Examples of injection molding machines equipped with such anti drooling injection nozzles are known from DE patent no. 689328 C, US patent no. 3354507 A, US 4 260 359 A, US 4 370 122 A and CN patent application no. 106182603 A.

### Object of the invention:

Based on this, it is the object of the present invention to provide an injection molding machine having an injection nozzle with an anti-drooling valve with a simple but yet very reliable construction.

According to the invention this is obtained by providing the injection nozzle with a valve member slidably arranged with respect to the nozzle tip so that it can move between a first position closest to the proximal end and a second position farther away from the proximal end, and so that the valve member closely covers the nozzle gate opening in its second position and leaves the nozzle gate open in its first position.

Thereby all plastic material outside the injection nozzle and downstream from the nozzle gate opening after each molding cycle is efficiently cut or stripped away from the injection nozzle by the valve member.

Furthermore, it is possible to design the nozzle gate without necessarily providing the nozzle gate with a locally reduced cross section for forming a cold plug of material in order to reduce drooling of material from the nozzle gate between two production cycles

In a preferred embodiment of the invention, the nozzle gate opening is arranged in an outer surface of the nozzle tip and the outer surface extend parallel with the longitudinal axis and the valve member is arranged so that it can slide on the outer surface.

In an especially simple and reliable construction the nozzle tip and the outer surface of the nozzle tip forms an axle tap and the valve member is formed by a bushing that can slide on the outer surface.

The outer surface may preferably in this relation be circular cylindrical and the bushing may have a circular cylindrical inner surface snugly surrounding the outer surface.

The nozzle tip may in some embodiments of the invention comprise two or more nozzle gates arranged at the same position along the longitudinal axis.

In this relation, the nozzle gates may furthermore be distributed equidistantly on different sides of the nozzle tip.

In a preferred embodiment providing that, the injection nozzle can easily be adapted to different mold constructions the nozzle tip is a separate component being releasably attached to the remaining part of the injection nozzle comprising the proximal end of the injection nozzle.

In an especially advantageous embodiment of the invention the injection molding machine further comprises a first movable mold plate and at least one guide element adapted for allowing the first movable mold plate to move in a direction parallel with the longitudinal axis, and where the first movable mold plate comprises the valve member and the injection molding machine comprises an actuator adapted for moving the first movable mold plate and the valve member between the first and the second position.

The injection machine may in this relation further comprise a second movable mold plate and at least one guide element adapted for allowing the second movable mold plate to move in a direction parallel with the longitudinal axis between a closed position where adjacent sides of the first and the second movable mold plates are abutting each other and forming substantially closed mold cavities between them and an open position where the first and the second movable mold plates are away from each other, and where the valve member is in its first position when the first and the second movable mold plates are in the open position and the first and the second movable mold plates are in the closed position when the valve member is in its second position.

In this relation, the mold is preferably a cold runner type mold, and the cavities between the first and the second movable mold plates forms cold runner channels.

### The drawing:

Figure 1: Is a principle drawing showing a cross section through a part of an injection molding apparatus according one embodiment of the invention in one position.
Figure 2: Is a principle drawing showing the embodiment of the invention as shown in figure 1 in another position.
Figure 3: Is a perspective drawing showing a detail of the embodiment according to figure 1 and 2 from one side.
Figure 4, 5 and 6: shows alternative embodiments of nozzle tip shown in figure 1, 2 and 3.

### Description of an embodiment:

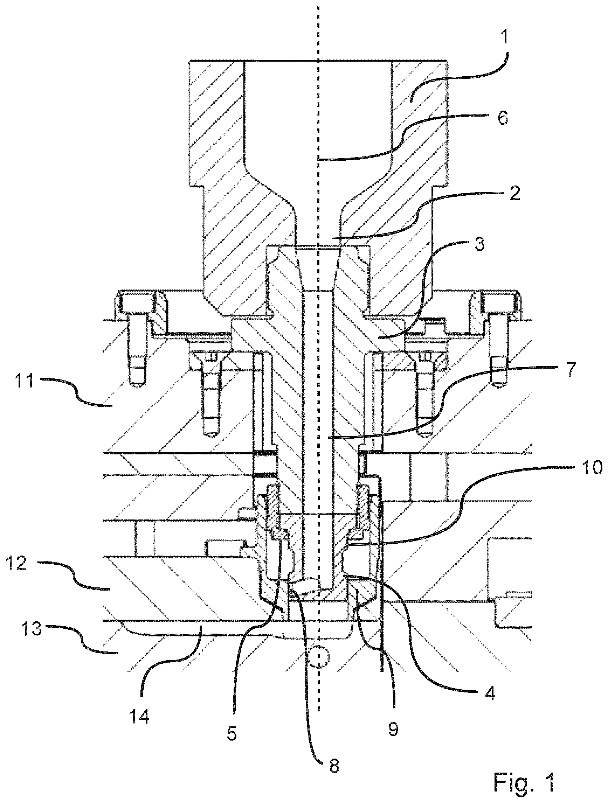

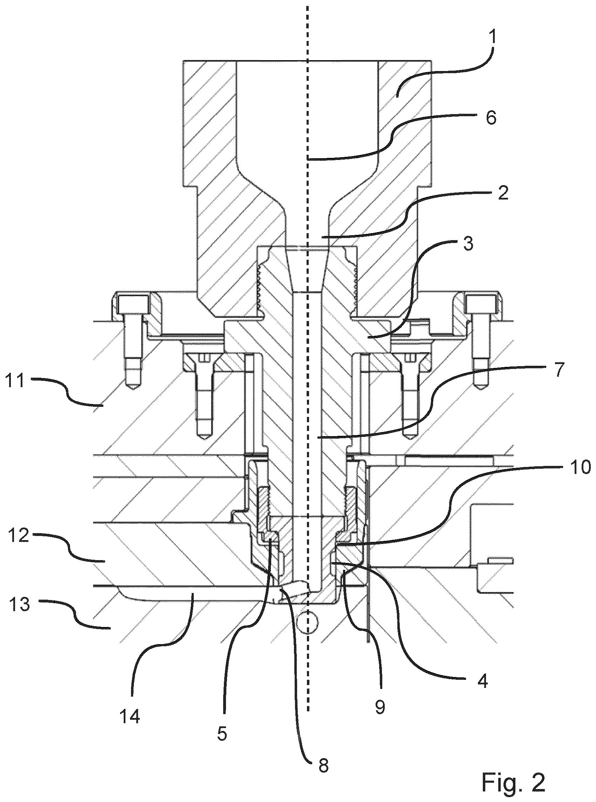

Figure 1 and 2 shows a part of an injection molding machine configured for automated molding of work pieces in plastics: As it will be apparent to the skilled person that the principle of the present invention is applicable to any type of machinery adapted for injection molding then only the parts necessary for illustrating the principle of the invention is shown in the drawing.

The injection molding machine comprises an injection barrel 1 with an outlet 2 where an injection nozzle 3 with a nozzle tip 4 is arranged. In this embodiment the nozzle tip 4 is attached to the injection nozzle 3 with a swivel nut 5 so that it forms the distal end of the injection nozzle 3, but in other embodiments the nozzle may e.g. be screwed directly into the injection nozzle 3 or even be produced as an integral part of the injection nozzle 3. The injection nozzle 3 and the nozzle tip have an injection channel 7 that extend along a longitudinal axis 6 from a proximal end of the injection nozzle 3 and to a nozzle gate opening 8 arranged at the nozzle tip 4.

The injection molding machine further comprises a valve member 9 slidably arranged with respect to the nozzle tip 4 so that it can move between a first position closest to the proximal end such as shown in figure 2 and a second position farther away from the proximal end as shown in figure 1, and so that the valve member 9 closely covers the nozzle gate opening 8 in its second position and leaves the nozzle gate 8 open in its first position.

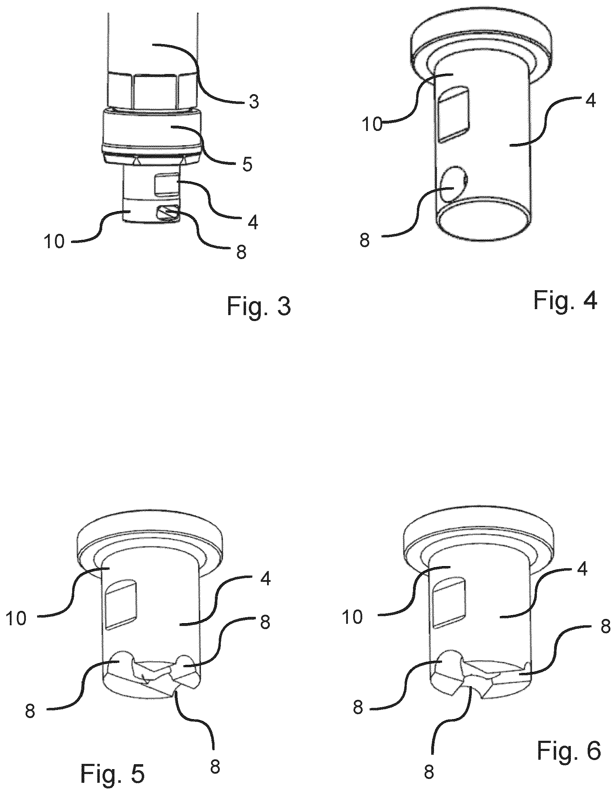

In this embodiment as shown in more detail in figure 3 the nozzle tip 4 forming the distal end of the injection nozzle 3 have a circular cylindrical outer surface 10 that forms an axle tap and the valve member 9 is a substantially circular cylindrical bushing that can slide on the outer surface 10 and snugly surrounds the outer surface 10 so that it provides an tight closure of the nozzle gate in its second position as shown in figure 2 and provides that the flow of plastic material from the nozzle tip 4 is free to flow through the injection nozzle when the bushing is mowed from its second position as shown in figure 1 an into its first position.

According to this principle the valve member 9 provides an efficient anti drooling function using only few components that are easy to assemble, clean and dismantle. Furthermore, it provides that a sprue can be avoided in the mold as the distal end of the injection nozzle 3 and the nozzle tip 4 can easily extend a distance into a conventional injection mold comprising a number of mold plates. In the embodiment shown in figure 1 and 2 illustrates a set of mold plates comprising a stationary mold plate 11 and a first movable mold plate 12. The stationary mold plate 11 is mounted in a fixed position along the longitudinal axis 6 with respect to the injection barrel 1 and thereby the injection nozzle 3 and the nozzle tip 4.

The first movable mold plate 12 is adapted to move along the longitudinal axis 6 and the valve member 9 is attached to the first movable mold plate 12 so that the first movable mold plate moves the valve member 9 between the open and the closed position. In this embodiment the injection molding machine further comprises an actuator (not shown) adapted for moving the first movable mold plate and thereby the valve member between the first and the second position.

In the embodiment shown in figure 1 and 2 the injection machine further comprises a second movable mold plate 13 being adapted to move along the longitudinal axis between a closed position where adjacent sides of the first and the second movable mold plates 12, 13 are abutting each other and forming substantially closed mold cavities between them and an open position where the first and the second movable mold plates are away from each other (not shown), and where the valve member 9 is in its first position when the first and the second movable mold plates 12, 13 are moved into their open position and the first and the second movable mold plates are in the closed position when the valve member is in its second position.

In this way the first and the second movable mold plates 12, 13 forms runner channels 14 when the mold plates are in their closed position and the first movable mold plate 12, together with the valve member 9 strips off the molded runner (not shown) when the first and the second movable mold plates 12, 13 are in their open position.

Although this embodiment provides a very simple construction for controlling the position of the valve member 9 then it will be apparent to the skilled person that the movement of the valve member 9 may alternatively be implemented using alternative or separate mechanisms and/or actuators being controlled independently.

In the embodiment shown in figure 1, 2 and 3 the nozzle tip 4 have only a single nozzle gate opening 8 with a substantially rectangular cross section. It will, however, be evident to the skilled person that nozzle tips having a different design than the one shown in figures 1, 2 and 3 may be used for different runner channel designs or purposes.

As examples of this figure 4, 5 and 6 shows alternative embodiments of the nozzle tip 4. Where the single nozzle gate opening 8 in figure is a circular cylindrical channel, and the nozzle tips shown in figure 5 and 6 (where the most distal part of the nozzle tips are removed in order to show all nozzle gate openings 8) both have three nozzle gate openings 8. In figure 5 the spacing between the nozzle gate opening are different and in figure 6 the spacing between each pair of adjacent nozzle gate openings 8 are equal. The number of nozzles gate openings may, however, be more than 3 in cases where e.g. the runner system is more complex, and the spacing may also be different between the individual nozzle gate openings.

## Claims

1. An injection molding machine configured for automated molding of work pieces in plastics, the injection molding machine comprising a mold comprising a first and a second mold plate and an injection barrel (1) with an outlet (2) and where the injection molding machine further comprises an injection nozzle (3) with a nozzle tip (4) forming a distal end of the injection nozzle, and where the injection nozzle extend through the first mold plate (12) and have an injection channel (7) extending along a longitudinal axis (6) from a proximal end of the injection nozzle (3) fastened to the barrel (1) and to a nozzle gate opening arranged at the nozzle tip, and **characterised in that** the first and the second mold plates (12, 13) are adapted for being moved in a direction parallel with the longitudinal axis between a closed position where adjacent sides of the first and the second movable mold plates are abutting each other and forming a substantially closed mold cavity or a cold runner channel between them and an open position and wherein the injection molding machine comprises a valve member (9) slidably connected to the nozzle tip (4) so that it can slide along the longitudinal axis (6) between a first position closest to the proximal end and a second position farther away from the proximal end, and so that the nozzle gate opening (8) is closed by the valve member (9) in its second position and open in its first position.

2. An injection molding machine according to claim 1 wherein the nozzle gate opening is arranged in an outer surface of the nozzle tip, the outer surface extending parallel with the longitudinal axis, and where the valve member is attached to or forms an integral part of the first mold plate so that it is forced to slide on the outer surface simultaneously with the first mold plate.

3. An injection molding machine according to claim 2, wherein the outer surface is circular cylindrical and the bushing have a circular cylindrical inner surface snugly surrounding the outer surface.

4. An injection molding machine according to claim 3, wherein the nozzle tip comprises two or more nozzle gates arranged at the same position along the longitudinal axis.

5. An injection molding machine according to claim 4, wherein the nozzle gates are distributed equidistantly on different sides of the nozzle tip.

6. An injection molding machine according to one or more of the preceding claims wherein the nozzle tip is a separate component being releasably attached to the remaining part of the injection nozzle comprising the proximal end.

## Patentansprüche

1. Eine Spritzgießmaschine, die zum automatisierten Formen von Werkstücken aus Kunststoff konfiguriert ist, wobei die Spritzgießmaschine eine Form umfassend eine erste und eine zweite Formplatte und einen Spritzzylinder (1) mit einem Auslass (2) umfasst, und wobei die Spritzgießmaschine weiter eine Einspritzdüse (3) mit einer Düsenspitze (4) umfasst, die ein distales Ende der Einspritzdüse bildet, und wobei sich die Einspritzdüse durch die erste Formplatte (12) erstreckt und einen Einspritzkanal (7) aufweist, der sich entlang einer Längsachse (6) von einem proximalen Ende der am Zylinder (1) befestigten Einspritzdüse (3) bis zu einer an der Düsenspitze angeordneten Düsenöffnung erstreckt, und **dadurch gekennzeichnet, dass** die erste und die zweite Formplatte (12, 13) so angepasst sind, dass sie in einer Richtung parallel zur Längsachse zwischen einer geschlossenen Position, in der benachbarte Seiten der ersten und der zweiten beweglichen Formplatte aneinander stoßen und zwischen sich einen im Wesentlichen geschlossenen Formhohlraum oder einen Kaltkanal bilden, und einer offenen Position bewegt werden können, und wobei die Spritzgießmaschine ein Ventilelement (9) umfasst, das verschiebbar mit der Düsenspitze (4) verbunden ist, sodass es entlang der Längsachse (6) gleiten kann zwischen einer ersten Position, die dem proximalen Ende am nächsten ist, und einer zweiten Position, die weiter vom proximalen Ende entfernt ist, und so dass die Düsenverschlussöffnung (8) durch das Ventilelement (9) in seiner zweiten Position geschlossen und in seiner ersten Position geöffnet ist.

2. Spritzgießmaschine nach Anspruch 1, wobei die Düsenöffnung in einer Außenfläche der Düsenspitze angeordnet ist, wobei die Außenfläche parallel zur Längsachse verläuft, und wobei das Ventilelement an der ersten Formplatte befestigt ist oder einen integralen Bestandteil davon bildet, so dass es gezwungen ist, gleichzeitig mit der ersten Formplatte auf der Außenfläche zu gleiten.

3. Spritzgießmaschine nach Anspruch 2, wobei die Außenfläche kreisförmig zylindrisch ist und die Buchse eine kreisförmige zylindrische Innenfläche aufweist, die die Außenfläche eng umschließt.

4. Spritzgießmaschine nach Anspruch 3, wobei die Düsenspitze zwei oder mehr Düsenöffnungen umfasst, die an der gleichen Position entlang der Längsachse angeordnet sind.

5. Spritzgießmaschine nach Anspruch 4, wobei die Düsenöffnungen in gleichem Abstand auf verschiedenen Seiten der Düsenspitze verteilt sind.

6. Spritzgießmaschine nach einem oder mehreren der vorhergehenden Ansprüche, wobei die Düsenspitze eine separate Komponente ist, die lösbar an dem verbleibenden Teil der Einspritzdüse befestigt ist, der das proximale Ende umfasst.

## Revendications

1. Machine de moulage par injection configurée pour le moulage automatisé de pièces en plastique, la machine de moulage par injection comprenant un moule comprenant une première et une seconde plaques de moulage et un cylindre d'injection (1) avec une sortie (2) et dans lequel la machine de moulage par injection comprend en outre une buse d'injection (3) avec une pointe de buse (4) formant une extrémité distale de la buse d'injection, et dans laquelle la buse d'injection traverse la première plaque de moulage (12) et présente un canal d'injection (7) s'étendant le long d'un axe longitudinal (6) depuis une extrémité proximale de la buse d'injection (3) fixée au cylindre (1) et jusqu'à une ouverture d'obturation de buse agencée à la pointe de buse, et **caractérisée en ce que** les première et seconde plaques de moulage (12, 13) sont adaptées pour être déplacées dans une direction parallèle à l'axe longitudinal entre une position fermée où les côtés adjacents des première et seconde plaques de moulage mobiles sont en butée l'un contre l'autre et forment une cavité de moule sensiblement fermée ou un canal de déplacement froid entre eux et une position ouverte et dans laquelle la machine de moulage par injection comprend un élément de soupape (9) relié de manière coulissante à la pointe de buse (4) de sorte qu'il peut coulisser le long de l'axe longitudinal (6) entre une première position la plus proche de l'extrémité proximale et une seconde position plus éloignée de l'extrémité proximale, et de sorte que l'ouverture de la porte de buse (8) est fermée par l'élément de soupape (9) dans sa seconde position et ouverte dans sa première position.

2. Machine de moulage par injection selon la revendication 1, dans laquelle l'ouverture de la porte de buse est agencée dans une surface extérieure de la pointe de buse, la surface extérieure s'étendant parallèlement à l'axe longitudinal, et dans laquelle l'élément de soupape est fixé à ou forme une partie intégrante de la première plaque de moule de sorte qu'il est forcé de glisser sur la surface extérieure simultanément avec la première plaque de moule.

3. Machine de moulage par injection selon la revendication 2, dans laquelle la surface extérieure est cylindrique circulaire et la bague présente une surface intérieure cylindrique circulaire entourant étroitement la surface extérieure.

4. Machine de moulage par injection selon la revendication 3, dans laquelle la pointe de buse comprend deux ou plusieurs portes de buse agencées à la même position le long de l'axe longitudinal.

5. Machine de moulage par injection selon la revendication 4, dans laquelle les portes de buse sont réparties de manière équidistante sur différents côtés de la pointe de buse.

6. Machine de moulage par injection selon une ou plusieurs des revendications précédentes, dans laquelle la pointe de buse est un composant séparé fixé de manière amovible à la partie restante de la buse d'injection comprenant l'extrémité proximale.
